Europäisches Patentamt

European Patent Office

Office européen des brevets

(11) Publication number : **0 683 269 A2**

# (12) EUROPEAN PATENT APPLICATION

(21) Application number : **95107695.9**

(22) Date of filing : **19.05.95**

(51) Int. Cl.⁶ : **E01F 9/04**

(30) Priority : **20.05.94 US 247093**

(43) Date of publication of application :
**22.11.95 Bulletin 95/47**

(84) Designated Contracting States :
**DE FR GB IT**

(71) Applicant : **MINNESOTA MINING AND
MANUFACTURING COMPANY
P.O. Box 33427
St. Paul, Minnesota 55133-3427 (US)**

(72) Inventor : **Jacobs, Gregory F., c/o Minnesota
Mining and
Manufac. Co.,
2501 Hudson Road P.O. Box 33427
Saint Paul, Minnesota 55133-3427 (US)**

Inventor : **Hedblom, Thomas P., c/o Minnesota
Mining and
Manufac. Co.,
2501 Hudson Road P.O. Box 33427
Saint Paul, Minnesota 55133-3427 (US)**
Inventor : **Bradshaw, T. Ian, c/o Minnesota
Mining and
Manufac. Co.,
2501 Hudson Rd PO Box 33427
Saint Paul, Minnesota 55133-3427 (US)**
Inventor : **Stump, Larry K., c/o Minnesota
Mining and
Manufac. Co.,
2501 Hudson Rd PO Box 33427
Saint Paul, Minnesota 55133-3427 (US)**
Inventor : **Bescup, Terrance L., c/o Minnesota
Mining and
Manufac. Co.,
2501 Hudson Rd PO Box 33427
Saint Paul, Minnesota 55133-3427 (US)**

(74) Representative : **VOSSIUS & PARTNER
Postfach 86 07 67
D-81634 München (DE)**

(54) Retroreflective pavement marking.

(57) Retroreflective pavement marking sheet (10) exhibiting improved retroreflective brightness at high incidence angles, the sheet comprising a binder layer (12) having first and second major surfaces (14, 16) and plurality of microspheres (18) partially embedded in and partially protruding from the first major surface, the binder layer comprising a binder material and pigment particles (20), wherein : (1) the binder layer comprises a selected quantity of pigment particles, (2) the microspheres have a selected average index of refraction, (3) the microspheres are present in selected quantity, and in some embodiments the microspheres are embedded to a selected depth. Flat and patterned pavement markings are disclosed.

*FIG.1*

The present invention relates to a retroreflective pavement marking exhibiting high retroreflective brightness at high incidence angles.

Pavement markings, such as those delineating the centerline and edgelines of a roadway are important in order to provide visual guidance for motor vehicle drivers. In some instances, colored markings, especially yellow but other colors as well, can be very helpful. An ongoing challenge to the industry is to provide retroreflective pavement markings of increased retroreflective brightness, particularly at nighttime when visibility is typically somewhat limited.

Currently pavement markings typically rely on an optical system comprising transparent microspheres partially embedded in a binder layer containing pigment particles. Traditionally such pigments as titanium dioxide and lead chromate have been used. Titanium dioxide is used to impart white color and lead chromate is used to impart yellow color. In some instances, colored pavement markings are made using tinted microspheres in combination with a binder layer containing a light scattering pigment such as titanium dioxide. See, for example, U.S. Patent No. 5,286,682 (Jacobs et al.).

Retroreflectivity is currently typically measured by an instrument in the laboratory at fixed entrance and observation angles, according to ASTM D 4061-89. Recent work (Transportation Research Record 1409 published 1994 by the Transportation Research Board) has shown that the entrance angle at which light is incident and observation angles from which a driver actually views a pavement marking, referred to herein as "approximate driver geometries", are greatly different from those geometries at which retroreflectance values are conventionally measured in the laboratory, referred to herein as "laboratory geometries". As a result, constructions that yield a relatively lower retroreflective brightness compared to a standard when measured at laboratory geometries may provide much higher retroreflective brightness values compared to that standard when measured at approximate driver geometries.

Attaining increased retroreflective brightness from pavement marking sheet materials is an ongoing challenge to the industry.

The present invention provides a retroreflective pavement marking sheet material with increased retroreflective brightness at high entrance angles, i.e., oblique observation angles such as the geometries at which an automobile driver observes a marking in front of the vehicle on a roadway. The retroreflective pavement markings provide improved retroreflective performance and thus offer increased driver safety.

In brief summary, a retroreflective pavement marking sheet of the invention is a sheet comprising a binder layer having first and second major surfaces and a plurality of microspheres partially embedded in and partially protruding from the first major surface, the binder layer comprising a binder material and pigment particles, wherein: (1) the binder layer comprises a selected quantity of pigment particles, (2) the microspheres have a selected average index of refraction, (3) the microspheres are present in selected quantity, and (4) in some embodiments the microspheres are embedded to a selected depth. Pavement markings of the invention may be flat or patterned as desired.

Pavement marking sheets of the invention may be in the form of preformed tapes, typically further comprising a conformance layer and/or adhesive layer on the second major surface of the binder layer, or marking sheets of the invention may be formed directly on the roadway if desired.

It has been discovered that when evaluating retroreflective brightnesses of various constructions at approximate driver geometries, relative retroreflectance rankings may depart dramatically from those determined at laboratory geometries. Accordingly, in order to accurately assess the relative effective retroreflective performance of different pavement marking constructions, evaluation must be performed at geometries approximating those under which the pavement marking will be observed when in use, i.e., "approximate driver geometries".

The invention will be further explained with reference to the drawing, wherein:

Figure 1 is a cross-sectional view of an illustrative flat pavement marking of the invention; and

Figure 2 is a cross-sectional view of an illustrative patterned pavement marking of the invention.

These figures, which are idealized, are not to scale and are intended to be merely illustrative and non-limiting.

In describing preferred embodiments of the invention, specific terminology will be used for the sake of clarity. The invention, however, is not intended to be limited to the specific terms so selected, and it is to be understood that each term so selected includes all the technical equivalents that operate similarly.

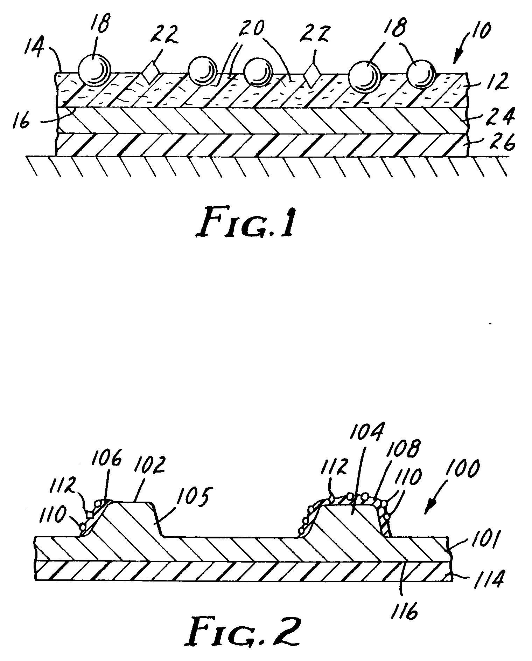

An illustrative flat pavement marking sheet of the invention is shown in Figure 1. Retroreflective pavement marking sheet 10 comprises binder layer 12 having first major surface 14 and second major surface 16 and a plurality of microspheres 18 partially embedded in and partially protruding from first major surface 14. Binder layer 12 comprises a binder material and pigment particles 20 dispersed therein. Marking 10 further comprises optional antiskid particles 22, optional conformance layer 24, and optional adhesive layer 26. Marking 10 is shown adhered to the surface of roadway 28.

An illustrative patterned pavement marking sheet of the invention is shown in Figure 2. Retroreflective pavement marking sheet 100 comprises base sheet 101 having protrusions 102 and 104 on first major surface 105. Binder layer 106 has been applied to protrusion 102 and binder layer 108 has been applied to protrusion 104. Microspheres 110 have been partially embedded in binder layer 106 and binder layer 108. Marking 100 further comprises pigment particles (not shown) dispersed in binder layers 106 and 108 and optional antiskid particles 112 and optional adhesive 114 on second major surface 116.

It has been discovered that the retroreflective brightness of pavement marking sheet materials is increased if three conditions are simultaneously met, namely that: (1) the binder layer comprises a selected quantity of pigment particles, (2) the microspheres have a selected average index of refraction, and (3) the microspheres are present in selected quantity. In some embodiments, a fourth characteristic, microsphere embedment, has been found to yield further unexpected results.

To achieve increased retroreflective brightness in accordance with the present invention, the binder layer, or at least the optically active zone thereof typically comprises a relatively high loading of pigment particles as compared to conventional commercial markings. As used herein, "the optically active zone" of the binder layer is that portion in which the microspheres are embedded and into which light being reflected by the pavement marking effectively penetrates. Typically this zone is on the order of up to 50 to 75 micrometers (up to 2 to 3 mils) thick. Preferably the dispersion of pigment particles is substantially uniform throughout the optically active zone of the binder layer. In many instances, the composition of the binder layer will tend to be substantially uniform throughout substantially the entirety of the binder layer as a result of the manner in which it is formed.

The loadings of pigments in accordance with this invention is very high relative to the amounts that are normally used in pavement markings. Pigments are typically one of the more expensive components in a pavement marking. As a result, manufacturers tend not to use the relatively high loadings that have now been found to provide increased retroreflective brightness.

In the case of diffuse pigments, such as titanium dioxide, the binder layer of either a flat or patterned pavement marking of the invention contains, at least in its optically active zone, and typically in its entirety, between about 5 and about 15 volume percent of pigment particles and preferably comprises between about 7 and about 12 volume percent of pigment particles. It has been observed that relatively higher loadings of pigment particles tend to lead to somewhat reduced retroreflective brightness at longer observation distances, e.g., 100 to 120 meters or more, and that relatively lower pigment loadings tend to lead to somewhat reduced retroreflective brightness at short and long observation distances, e.g., from 15 or so meters to 120 meters or more.

In addition to titanium dioxide pigment, e.g., rutile titanium dioxide which is commonly used in pavement markings, other illustrative examples of suitable pigments include lead chromate and bismuth vanadate. It will be understood that diffuse pigment particles having somewhat different indices of refraction may be used if desired. Pigments having a particle size between about 0.1 and about 2 micrometers are typically preferred with those between about 0.2 and about 0.8 micrometers being more preferred. In addition, so-called pigment extenders such a magnesium oxide can be used in addition to the diffuse pigment.

In addition to diffuse pigment particles, pearlescent pigment particles such as nacreous flakes can be used in both flat and patterned pavement markings of the invention. Such pigments are known to exhibit some diffuse pigment type effects as well as some specular pigment type effects, but have been used in accordance with the invention to achieve some surprisingly bright markings. Pearlescent pigment loadings of between about 12 and 21 volume percent, preferably between about 16 and about 19 percent, in the optically active zone of the binder layer have been found to provide surprising results.

To achieve increased retroreflective brightness in accordance with the invention, the microspheres in flat pavement markings of the invention typically have an average index of refraction of between about 1.70 and about 1.95 and preferably have an average index of refraction of between about 1.75 and about 1.85. In a flat pavement marking using pearlescent pigments, it has been observed that microspheres with an average index of refraction of about 1.9 tend to provide an optimum degree of retroreflective brightness across an optimum range of observation distances.

In the case of a flat pavement marking, the microspheres are typically present in sufficient quantity that they cover between about 6 and about 12 percent, preferably between about 8 and about 11 percent, of the area of first major surface of the binder layer. If greater quantities of microspheres are used, they will tend to shadow each other, thereby reducing the overall retroreflective performance of the marking. If lesser quantities of microspheres are used, the retroreflective performance will tend to be reduced as well.

Typically, the microspheres in a flat pavement marking of the invention will be embedded to an average depth of between about 50 and 75 percent of their diameter, preferably to between about 60 and 70 percent of their diameter. This is a greater depth than to which microspheres are typically embedded. Surprisingly it has been discovered that the greater depth of embedment, which imparts greater durability to the marking due to stronger bonding of the binder layer to the microsphere, does not substantially degrade the resultant retroreflective brightness of the marking as was expected. As a result, the brighter pavement markings of the invention can also provide a longer useful performance lifetime.

In the case of a patterned pavement marking, where the microspheres and their embedded portions through which the desired optical interaction with the dispersed pigment particles must occur are oriented such that light is incident at nearer the normal thereto than is the case with flat markings, shadowing of microspheres by other microspheres is not a significant problem and the microspheres are preferably packed closely together. For instance, if the microspheres are of substantially uniform size, their closest monolayer packing arrangement will be a hexagonal packing in which they cover on the order of 90 percent of the surface area. It will be understood, of course, that shadowing by protrusions in the pattern of the marking may be an important issue in some embodiments.

In the case of patterned pavement markings of the invention, wherein microspheres and the binder layer in which they are embedded are presented in a relatively more normal or perpendicular orientation toward approaching vehicles, the microspheres preferably have an average index of refraction in the range of about 1.85 to about 1.94. In such markings, when the pigment is a diffuse reflecting pigment such as titanium dioxide, microspheres with an average index of refraction between about 1.87 and about 1.92 are most preferred. When the pigment is a pearlescent pigment, microspheres with an average index of refraction between about 1.88 and about 1.92 are most preferred to provide maximum retroreflective brightness at observation distances up to about 80 meters and microspheres having an average index of refraction between about 1.90 and about 1.94 to provide maximum retroreflective brightness at observation distances over about 80 meters.

Suitable microspheres for both flat and patterned pavement markings of the invention include glass microspheres and non-vitreous ceramic microspheres. Ceramic microspheres typically tend to have somewhat fewer defects than glass microspheres, and accordingly are preferred as they tend to yield somewhat brighter resultant products. Also, many ceramic microspheres tend to be more durable than glass microspheres.

Microspheres used herein will typically be between about 25 and about 2,000 micrometers, preferably less than about 1,000 micrometers, and most preferably between about 40 and 600 micrometers, in diameter. Smaller microspheres tend to induce greater diffraction losses that result in reduced retroreflective brightness. Larger microspheres tend to make the resultant product more bulky and in the case of flat pavement markings will tend to lead to more shadowing of microspheres by other microspheres.

Typically a retroreflective pavement marking sheet of the invention further comprises antiskid particles. Suitable antiskid particles can be readily selected by those skilled in the art.

The binder material is typically a polymeric material. The polymeric material, at least in the regions around the embedded portions of the microspheres, i.e., the optically active zones thereof, should be sufficiently light transmissive that incident light refracted by the microspheres can pass through the binder material to interact with the dispersed pigment particles. Many useful polymeric materials for use in the binder layers of pavement markings are well known and a suitable one for use in a particular embodiment of the present invention can be readily selected by one skilled in the art. Illustrative examples of suitable polymeric materials include thermoset materials and thermoplastic materials. Illustrative examples include urethane, epoxies, acid olefin copolymers such as ethylene/methacrylic acid, polyvinyl chloride/polyvinyl acetate copolymers, etc.

If desired, the pavement marking sheet may further comprise components on the second major surface of the binder layer to improve the performance of the resultant pavement marking. For example, a conformance layer and/or adhesive layer may be provided. Many useful examples of such components of pavement marking sheets are well known and selection of suitable choices for particular embodiments of the invention will be readily made by one with ordinary skill in the art. Illustrative examples include pressure sensitive adhesives, rubber resin adhesives, neoprene contact adhesives, etc. U.S. Patent No. 4,117,192 (Jorgensen) discloses adhesives which would be useful herein.

As shown in Figure 2, patterned markings of the invention may be made with binder layer and partially embedded microspheres disposed only on the sides of the protrusions (as on protrusion 102), or disposed on the sides and tops of the protrusions (as on protrusion 104). If desired, the marking may have some protrusions with binder layer and partially embedded microspheres on top and some protrusions that have binder layer and microspheres only on the sides thereof. In embodiments with binder layer and microspheres on top of some or all protrusions, the top of the protrusion preferably has microspheres and pigment loading selected in accordance with the discussion above regarding flat markings while the binder layer and microspheres on the side or sides of the same protrusion are preferably selected in accordance with the discussion above regarding patterned pavement markings. Thus, the density of microspheres may be much less on the top of a protrusion than on the side(s) thereof.

In use, preformed pavement markings of the invention are secured to a roadway surface, typically with an adhesive. If desired, the marking of the invention may be formed directly on the road. Because the present invention provides pavement markings that are brighter and more visible under nighttime driving conditions, the roadway is safer.

Examples

The invention will be further explained by the following illustrative examples which are intended to be non-limiting.

Example 1

A series of 40 flat pavement marking sheets were made varying the microsphere loading, depth of microsphere embedment, microsphere index of refraction, and pigment loading.

In each sheet, the binder layer was a film of ethylene/methacrylic acid copolymer containing a specified volume percent of rutile titanium dioxide pigment surface treated to disperse in the polymeric material.

Glass microspheres having specified indices of refraction (i.e., 1.5, 1.75, and 1.9) were embedded in the binder layer to a specified depth. For each range of index of refraction, the microspheres had been screened to uniform size range of 45 to 60 mesh. The microspheres were sprinkled onto the binder layer, the rate of sprinkling being normalized for the varying bulk density of the three different glass formulations to yield samples with similar numbers of microspheres per unit area as indicated.

The retroreflective brightness of each sample, in millicandela/meter$^2$/lux, i.e., the coefficient of retroreflective luminence, $R_L$, was measured at entrance angles and observation angles corresponding to four different observation distances for the driver of a 1989 Pontiac Bonneville automobile as follows:

| Distance | Entrance | Observation |
|---|---|---|
| 30 m | 88.5° | 1.0° |
| 50 m | 89.3° | 0.6° |
| 80 m | 89.6° | 0.4° |
| 120 m | 89.7° | 0.25°. |

The retroreflective brightness of each sample was also measured via the laboratory techniques previously used for pavement marking materials using an ECOLUX portable retroreflectometer having a measurement geometry as follows:

Entrance Angle - 86.5°

Observation Angle - 1.0°.

All retroreflective brightness measurements were taken at presentation and orientation angles of 0° and -180°, respectively.

The following results obtained are tabulated in Table I wherein "No." indicates the sample number; "Area" is the percentage of the area of the first major surface of the binder layer which is covered by microspheres; "Sink" is the average depth of embedment of the microspheres; "IR" is the average index of refraction of the microspheres; "Vol." is the volume percentage of pigment in the binder layer; and "Brightness" is the retroreflective brightness of the pavement marking at the indicated distances (i.e., 30, 50, 80, and 120 meters, respectively) and with laboratory geometries.

| Table I | | | | | Brightness | | | | |
|---|---|---|---|---|---|---|---|---|---|
| No. | Area | Sink | IR | Vol. | 30 m | 50 m | 80 m | 120m | Lab |
| 1 | 6.3 | 50 | 1.5 | 5.2 | 350 | 470 | 480 | 610 | 270 |
| 2 | 12.7 | 50 | 1.5 | 5.2 | 550 | 680 | 710 | 940 | 410 |
| 3 | 6.3 | 70 | 1.5 | 5.2 | 390 | 680 | 900 | 1340 | 240 |
| 4 | 12.7 | 70 | 1.5 | 5.2 | 530 | 860 | 1140 | 1630 | 390 |
| 5 | 7.4 | 50 | 1.75 | 5.2 | 850 | 1270 | 1560 | 2070 | 640 |
| 6 | 14.8 | 50 | 1.75 | 5.2 | 1570 | 1730 | 1820 | 2580 | 1090 |
| 7 | 7.4 | 70 | 1.75 | 5.2 | 880 | 1370 | 1840 | 2830 | 590 |
| 8 | 14.8 | 70 | 1.75 | 5.2 | 1240 | 1610 | 1900 | 2790 | 910 |
| 9 | 7.4 | 50 | 1.9 | 5.2 | 1370 | 1700 | 1910 | 2920 | 640 |
| 10 | 14.9 | 50 | 1.9 | 5.2 | 1580 | 2110 | 2500 | 3650 | 1270 |
| 11 | 7.4 | 70 | 1.9 | 5.2 | 1050 | 1620 | 2090 | 3240 | 710 |
| 12 | 14.9 | 70 | 1.9 | 5.2 | 1440 | 1970 | 2260 | 3300 | 1080 |
| 13 | 6.3 | 50 | 1.5 | 8.6 | 810 | 1090 | 1150 | 1680 | 330 |
| 14 | 12.7 | 50 | 1.5 | 8.6 | 640 | 760 | 910 | 1560 | 530 |
| 15 | 6.3 | 70 | 1.5 | 8.6 | 480 | 760 | 990 | 1720 | 270 |
| 16 | 12.7 | 70 | 1.5 | 8.6 | 830 | 990 | 1130 | 1770 | 390 |
| 17 | 7.4 | 50 | 1.75 | 8.6 | 890 | 1360 | 1820 | 2940 | 320 |
| 18 | 14.8 | 50 | 1.75 | 8.6 | 1440 | 1810 | 2060 | 2900 | 1200 |
| 19 | 7.4 | 70 | 1.75 | 8.6 | 1050 | 1640 | 2220 | 3520 | 700 |
| 20 | 14.8 | 70 | 1.75 | 8.6 | 1360 | 1830 | 2150 | 3170 | 1080 |
| 21 | 7.4 | 50 | 1.9 | 8.6 | 1380 | 2360 | 2870 | 3690 | 1020 |
| 22 | 14.9 | 50 | 1.9 | 8.6 | 2400 | 2890 | 3250 | 3960 | NA |
| 23 | 7.4 | 70 | 1.9 | 8.6 | 1160 | 2040 | 2490 | 3190 | 850 |
| 24 | 14.9 | 70 | 1.9 | 8.6 | 1920 | 3020 | 3720 | 4890 | 1340 |
| 25 | 6.3 | 50 | 1.5 | 12.7 | 540 | 920 | 1090 | 1330 | 330 |
| 26 | 12.7 | 50 | 1.5 | 12.7 | 640 | 960 | 1090 | 1300 | 460 |
| 27 | 6.3 | 70 | 1.5 | 12.7 | 750 | 830 | 1020 | 1270 | 270 |
| 28 | 12.7 | 70 | 1.5 | 12.7 | 580 | 930 | 1080 | 1250 | 410 |
| 29 | 7.4 | 50 | 1.75 | 12.7 | 1000 | 1580 | 1830 | 2330 | 880 |
| 30 | 14.8 | 50 | 1.75 | 12.7 | 1360 | 1780 | 1960 | 2210 | 1370 |

| 31 | 7.4 | 70 | 1.75 | 12.7 | 1090 | 1790 | 2240 | 2840 | 720 |
| 32 | 14.8 | 70 | 1.75 | 12.7 | 1490 | 2400 | 3030 | 3970 | 1050 |
| 33 | 7.4 | 50 | 1.9 | 12.7 | 1370 | 2400 | 2860 | 3530 | 970 |
| 34 | 14.9 | 50 | 1.9 | 12.7 | 2230 | 2900 | 2880 | 3130 | NA |
| 35 | 7.4 | 70 | 1.9 | 12.7 | 1550 | 2630 | 3300 | 4210 | 1100 |
| 36 | 14.9 | 70 | 1.9 | 12.7 | 2050 | 2940 | 3350 | 3980 | NA |
| 37 | 6.6 | 45 | 1.75 | 8.6 | 1050 | 1500 | 1850 | 2870 | 750 |
| 38 | 14.0 | 45 | 1.75 | 8.6 | 1840 | 2260 | 2420 | 3340 | 1310 |
| 39 | 6.6 | 65 | 1.75 | 8.6 | 1100 | 1660 | 2140 | 3410 | 710 |
| 40 | 14.0 | 65 | 1.75 | 8.6 | 1550 | 2370 | 2760 | 3590 | 1140 |

As seen from these results, the laboratory geometry results do not correlate with the results obtained at approximate driver geometries. For instance, according to the results, Sample 14 was found to be brighter than either Sample 13 or Sample 15 at laboratory geometries, but one or both of Samples 13 and 15 was found to be brighter at approximate driver geometries. Sample 2 was found to be brighter than Sample 3 at laboratory geometries, but Sample 3 was brighter at approximate driver geometries corresponding to longer distances. A similar result is seen in comparison of Samples 16 and 17.

Example 2

The retroreflective brightness results, measured as in Example 1, of flat markings with ceramic microspheres having varying refractive index and varying pigment loading were evaluated.

The binder layer was a urethane composition containing the indicated amounts of pigment. In samples 1-16 the pigment was particles of titanium dioxide in epoxy (60/40 weight ratio) and in Samples 17-23 the pigment was nacreous pearlescent flake. Microspheres were embedded to between 45 and 55 percent of their diameter.

The following results obtained are tabulated in Table II wherein "No." indicates the sample number; "Area" is the percentage of the area of the first major surface of the binder layer which is covered by microspheres; "IR" is the average index of refraction of the microspheres; "Vol." is the volume percentage of pigment in the binder layer; and "Brightness" is the retroreflective brightness of the pavement marking at the indicated distances (i.e., 30, 50, 80, and 120 meters, respectively) and with laboratory geometries.

| Table II | | | | Brightness | | | | |
|---|---|---|---|---|---|---|---|---|
| No. | Area | IR | Vol. | 30 m | 50 m | 80 m | 120m | Lab |
| 1 | 11.3 | 1.67 | 12.9 | 940 | 910 | 870 | 970 | 2260 |
| 2 | 11.2 | 1.725 | 12.9 | 1310 | 1190 | 800 | 610 | 2940 |
| 3 | 11.3 | 1.745 | 12.9 | 1830 | 1730 | 1350 | 1160 | 4170 |
| 4 | 11.3 | 1.75 | 12.9 | 1310 | 1190 | 800 | 610 | 2940 |
| 5 | 11.3 | 1.765 | 12.9 | 2020 | 2140 | 1980 | 1870 | 4060 |
| 6 | 11.3 | 1.795 | 12.9 | 2200 | 2160 | 1830 | 1560 | 5030 |
| 7 | 11.3 | 1.85 | 12.9 | 2150 | 2030 | 1620 | 1440 | 5810 |
| 8 | 11.3 | 1.875 | 12.9 | 1610 | 1640 | 1570 | 1850 | 3870 |
| 9 | 11.3 | 1.9 | 12.9 | 1510 | 1590 | 1250 | 1140 | 3710 |
| 10 | 5.6 | 1.785 | 12.9 | 1260 | 1360 | 1390 | 1260 | 2700 |
| 11 | 8.4 | 1.785 | 12.9 | 1220 | 1210 | 1030 | 970 | 3000 |
| 12 | 11.3 | 1.785 | 12.9 | 1610 | 1640 | 1570 | 1850 | 3870 |
| 13 | 14.1 | 1.785 | 12.9 | 1260 | 1150 | 980 | 910 | 3600 |
| 14 | 16.9 | 1.785 | 12.9 | 1450 | 1240 | 950 | 810 | 4350 |
| 15 | 19.7 | 1.785 | 12.9 | 1990 | 1700 | 1270 | 1090 | 5940 |
| 16 | 22.5 | 1.785 | 12.9 | 1960 | 1680 | 1310 | 1220 | 5870 |
| 17 | 11.3 | 1.745 | 16.5 | 760 | 630 | 430 | 430 | 2310 |
| 18 | 11.3 | 1.765 | 16.5 | 700 | 600 | 440 | 410 | 2280 |
| 19 | 11.3 | 1.795 | 16.5 | 1000 | 840 | 570 | 490 | 3470 |
| 20 | 11.3 | 1.83 | 16.5 | 1060 | 860 | 610 | 570 | 4420 |
| 21 | 11.3 | 1.865 | 16.5 | 1400 | 1220 | 840 | 830 | 6830 |
| 22 | 11.3 | 1.915 | 16.5 | 1350 | 1520 | 1230 | 1380 | 11830 |
| 23 | 11.3 | 1.94 | 16.5 | 1150 | 1090 | 810 | 1040 | 13160 |

Example 3

The retroreflective brightness results, measured as in Example 1, of patterned markings with ceramic microspheres having varying refractive index and varying pigment loading were evaluated.

The same binder material was used as in Example 2, with the microspheres being flood coated thereon rather than applying microspheres in limited quantities. Samples of binder material with partially protruding microspheres were laminated to wooden sticks which were in turn laminated to aluminum panels for measurement. The pieces of retroreflective sample were 4 inches wide and 1/8 inch tall and were arranged on the aluminum panel, in parallel, spaced 5 inches apart.

Samples 1-13 were made using the indicated amount of titanium dioxide pigment. Samples 14-30 were made using the indicated amount of nacreous pearlescent pigment.

The following results obtained are tabulated in Table III wherein "No." indicates the sample number; "IR" is the average index of refraction of the microspheres; "Vol." is the volume percentage of pigment in the binder layer; and "Brightness" is the retroreflective brightness of the pavement marking at the indicated distances (i.e.,

30, 50, 80, and 120 meters, respectively) and with laboratory geometries.

| Table III | | | Brightness | | | | |
|---|---|---|---|---|---|---|---|
| No. | IR | Vol. | 30 m | 50 m | 80 m | 120m | Lab |
| 1 | 1.94 | 3.3 | 1630 | 1970 | 2190 | 1960 | 5060 |
| 2 | 1.94 | 5.3 | 1940 | 2330 | 2580 | 2320 | 5370 |
| 3 | 1.94 | 7.5 | 2320 | 2680 | 2730 | 2610 | 6070 |
| 4 | 1.94 | 10.0 | 2660 | 3210 | 3660 | 3760 | 6070 |
| 5 | 1.94 | 12.9 | 2920 | 3520 | 3850 | 3370 | 7090 |
| 6 | 1.745 | 12.9 | 3210 | 3230 | 2950 | 2640 | 4230 |
| 7 | 1.795 | 12.9 | 4610 | 4690 | 4300 | 4190 | 6090 |
| 8 | 1.83 | 12.9 | 5120 | 5210 | 4530 | 4010 | 7350 |
| 9 | 1.865 | 12.9 | 5920 | 6460 | 6130 | 5820 | 9040 |
| 10 | 1.88 | 12.9 | 5910 | 6720 | 6660 | 6500 | 9370 |
| 11 | 1.9 | 12.9 | 5150 | 6120 | 6290 | 6140 | 9150 |
| 12 | 1.915 | 12.9 | 4540 | 5620 | 5910 | 6110 | 10530 |
| 13 | 1.94 | 12.9 | 3570 | 4470 | 5080 | 5530 | 8030 |
| 14 | 1.745 | 16.5 | 3560 | 3570 | 3120 | 2760 | 5100 |
| 15 | 1.795 | 16.5 | 5490 | 5730 | 5300 | 4540 | 8870 |
| 16 | 1.83 | 16.5 | 7160 | 7380 | 5310 | 5000 | 12280 |
| 17 | 1.865 | 16.5 | 8730 | 10070 | 9210 | 7880 | 17800 |
| 18 | 1.88 | 16.5 | 9180 | 11440 | 11520 | 9850 | 19890 |
| 19 | 1.89 | 16.5 | 8680 | 11480 | 11880 | 10010 | 25730 |
| 20 | 1.9 | 16.5 | 8940 | 12400 | 13790 | 12950 | 26560 |
| 21 | 1.915 | 16.5 | 6960 | 11310 | 14580 | 15190 | 33150 |
| 22 | 1.93 | 16.5 | 6360 | 9860 | 13070 | 13410 | 28290 |
| 23 | 1.94 | 16.5 | 5610 | 9040 | 12210 | 13040 | 34220 |
| 24 | 1.94 | 4.4 | 2770 | 3980 | 5180 | 7190 | 17380 |
| 25 | 1.94 | 6.9 | 2640 | 3950 | 5130 | 7010 | 16420 |
| 26 | 1.94 | 9.7 | 3560 | 5510 | 6780 | 9260 | 28010 |
| 27 | 1.94 | 12.9 | 4480 | 7690 | 10130 | 14720 | 35710 |
| 28 | 1.94 | 16.5 | 5320 | 9250 | 12660 | 19690 | 39900 |
| 29 | 1.94 | 20.6 | 5690 | 10020 | 12840 | 20150 | 46650 |
| 30 | 1.94 | 25.3 | 4910 | 8760 | 11150 | 16420 | 41990 |

Various modifications and alterations of this invention will become apparent to those skilled in the art with-

9

out departing from the scope and spirit of this invention.

## Claims

1. A flat retroreflective pavement marking sheet comprising a binder layer having first and second major surfaces and plurality of microspheres partially embedded in and partially protruding from said first major surface of said binder layer, said binder layer comprising a binder material and pigment particles, characterized in that:

said binder layer comprises between about 5 and 15 volume percent of said pigment particles;

said microspheres have an average index of refraction of between about 1.70 and about 1.95; and

said microspheres are present in sufficient quantity that they cover between about 6 and about 12 percent of the area of said first major surface.

2. The sheet of claim 1 further characterized in that the binder layer comprises between about 7 and 12 volume percent of said pigment particles.

3. The sheet of claim 1 or 2 further characterized in at least one of the following:

a) said pigment particles have a particle size between about 0.1 and about 2 micrometers; or

b) said pigment particles have a particle size between about 0.2 and about 0.8 micrometers.

4. The sheet of any of claims 1 to 3 further characterized in at least one of the following:

a) said binder layer contains titanium dioxide pigment particles; or

b) said binder layer contains nacreous pigment particles.

c) said binder layer contains nacreous pigment particles and said microspheres have an average index of refraction of about 1.9.

5. The sheet of any of claims 1 to 4 further characterized in at least one of the following:

a) said microspheres have an average index of refraction of between about 1.75 and about 1.85; or

b) said microspheres cover between about 8 and about 11 percent of the area of said first major surface; or

c) said microspheres are between about 40 and about 600 micrometers in diameter; or

d) microspheres are glass or non-vitreous ceramic; or

e) said microspheres are sunk to an average of between about 50 and 75 percent of their diameter.

f) said microspheres are sunk to an average of between about 60 and 70 percent of their diameter.

6. A patterned retroreflective pavement marking sheet comprising a base sheet having first and second major surfaces, said first major surface having a plurality of protrusions extending upwardly therefrom, at least one side on at least some of said protrusions having a binder layer thereon, said binder layer having a first major surface in which a plurality of microspheres partially embedded in and partially protruding from, said binder layer comprising a binder material and pigment particles, characterized in that:

said binder layer comprises between about 5 and 15 volume percent of said pigment particles; and

said microspheres have an average index of refraction of between about 1.85 and about 1.95.

7. The sheet of claim 6 further characterized in at least one of the following:

a) binder layer comprises between about 7 and 12 volume percent of said pigment particles; or

b) said pigment particles have a particle size between about 0.1 and about 2 micrometers; or

c) said pigment particles have a particle size between about 0.2 and about 0.8 micrometers.

8. The sheet of claim 6 or 7 further characterized in that said binder layer contains titanium dioxide pigment particles.

9. The sheet of any of claims 6 to 8 further characterized in at least one of the following:

a) said microspheres have an average refractive index between about 1.87 and about 1.92; or

b) said pigment particles are nacreous pigment particles and said binder layer comprises between about 12 and about 25 volume percent of said pigment particles.

10. The sheet of any of claims 6 to 9 further characterized in that said binder layer contains nacreous pigment particles.

11. The sheet of claim 10 further characterized in that said microspheres have an average index of refraction of about 1.88 and about 1.92.

12. The sheet of any of claims 6 to 11 further characterized in at least one of the following:
   a) said microspheres cover up to about 90 percent of the surface area of said binder layer; or
   b) microspheres are glass or non-vitreous ceramic.

13. The sheet of any of claims 1 to 12 further characterized in that said binder material is a polymeric material selected from one or more of the following: urethane, epoxy, acid olefin copolymer, and polyvinyl chloride/polyvinyl acetate copolymer.

14. The sheet of any of claims 1 to 13 further comprising an adhesive layer on said second major surface of said base sheet.

15. A roadway characterized in that it is marked with a sheet of any of claims 1 to 14.

FIG.1

FIG.2